# EUROPÄISCHE PATENTSCHRIFT

(11) **EP 0 278 980 B1**
(45) Veröffentlichungstag und Bekanntmachung des Hinweises auf die Patenterteilung: **11.05.1994**
(21) Anmeldenummer: 87906172.9
(22) Anmeldetag: 13.08.1987
(51) Int. Cl.: B01D 53/34

(54) **VORRICHTUNG UND VERFAHREN ZUR OPTIMALEN ENERGIEAUSBEUTE BEI HEIZUNGSANLAGEN, VERRINGERUNG DER SCHADSTOFFERZEUGUNG UND ZUR ABGASREINIGUNG**
PROCESS AND DEVICE FOR OPTIMISING ENERGY OUTPUT IN HEATING INSTALLATIONS, REDUCING THE POLLUTANTS GENERATED AND CLEANING FLUE GASES
PROCEDE ET DISPOSITIF PERMETTANT D'OBTENIR UN RENDEMENT OPTIMAL D'ENERGIE DANS DES INSTALLATIONS DE CHAUFFAGE, UNE REDUCTION DE LA GENERATION DE POLLUANTS ET LE NETTOYAGE DES GAZ DE FUMEE

(30) Priorität: 16.08.1986 DE 3627914
(43) Veröffentlichungstag der Anmeldung: 24.08.1988
(73) Patentinhaber: Neumann, Siegmar R., D-91795 Dollnstein (DE)
(72) Erfinder: Neumann, Siegmar R., D-91795 Dollnstein (DE)
(86) Internationale Anmeldenummer: EP8700446
(87) Internationale Veröffentlichungsnummer: WO8801198

(56) Entgegenhaltungen:
- EP-A- 0 030 982
- EP-A- 0 060 345
- US-A- 3 997 415

## Beschreibung

### Anwendungsgebiet

Verbrennungsanlagen jeglicher Art und Größe.

### Zweck

Zweck der Anwendung ist das Erreichen einer optimalen Energieausbeute mit Reduzierung der Schadstoffentstehung und Reinigung der Rauchgase.

### Stand der Technik

**1. Optimale Energieausbeute, Verringerung der Schadstofferzeugung**
   Konstruktionsbedingt sind Gebläsebrenner einer Heizungsanlage nicht in der Lage ihren Betrieb, und damit den Grad der Verbrennung, den z.T. stark schwankenden Betriebsbedingungen anzupassen. Äußere Einflüsse wie Luftdruckschwankungen, Wind, Föhn, Luftfeuchte und -zusammensetzung haben jedoch einen starken Einfluß auf das Brennverhalten der Primärenergien und damit auf Energieausbeute und Schadstoffproduktion.
   Heizungsanlagen können deshalb nicht optimal betrieben werden was zu Energieverschwendung und Schadstoffausstoß führt.
**2. Abgasreinigung**
   Es wurde und wird versucht das Abgas der Heizungsanlagen zu reinigen um so die Emission von Schadstoffen (SO₂/SO₃ und NOₓ) zu verringern.

Bekannt ist hier vor allem die Abgaswäsche, die auf Schwefelausscheidungen abzielt:
Als Waschmedien werden vor allem verwendet Wasser,Laugen, Kalkmilch.
Zur Beseitigung der Stickoxide wird vor allem die Katalysatortechnik eingesetzt.
Aus der EP-A-00 30 982 ist ein Verfahren zum Behandeln von Rauchgas von Gebäudeheizungen bekannt, bei dem der Abgasstrom stromab des Heizkessels zunächst auf ca 65°C abgekühlt, dann gefiltert und mittels eines Sauggebläses aus dem Schornstein **gepreßt** wird. Beim Filtrieren werden zwar feste Partikel und Derivate weitgehend aufgefangen; Schwefelbestandteile oder Schwefel enthaltende Schadstoffe jedoch nur zum Teil. Die durch das Kühlen aus dem Abgasstrom entnommene Wärme wird zwar gewinnbringend eingesetzt, so daß sich eine verbesserte Energieausnutzung ergibt; jedoch ist das Rückhalten der Schadstoffanteile nicht zufriedenstellend.

Aus der US-A-3997415 ist es bekannt, zum Ausscheiden von Schwefeldioxiden aus Abgasen, beispielweise der Verbrennung von Schweröl, dadurch auszuscheiden, daß der Abgasstrom in einer Zwischenkammer mit energiereichen Strahlen oder mit ultraviolettem Licht in einer Reaktionskammer bestrahlt wird, ehe er durch einen Staubabscheider und einen Nachabscheider zum Ausbringen von Schwefeldioxiden geleitet wird. In die Reaktionskammer wird zusätzlich Luft eingeführt, die durch die Bestrahlung schon außerhalb der Reaktionskammer kontaminiert ist und einen beträchtlichen Anteil an Ozon und NOₓ enthält. Durch die Einmischung der kontaminierten Luft in den Abgasstrom und durch die Bestrahlung in der Reaktionskammer sollen schädliche Schadstoffe wie NOₓ, SO₂ und O₃ in Staubnebel und Staub umgewandelt werden, der nachfolgend leichter auszuscheiden ist.

Aus der EP-A- 0060345 ist es schließlich bekannt, im Abgaskanal von öl- oder gasbefeuerten Heizkesseln einen Luftkanal vorzusehen, durch den den Abgasen zur Vermeidung von Kondensatausscheidung im Schornstein Luft beigemischt wird.
Allerdings wird dabei eine Abgastemperatur von 180°C vor dem Schornstein nicht unterschritten, bei der eine nennenswerte Umwandlung gasförmiger Schadstoffanteile nicht erfolgt.

### Kritik am Stand der Technik

**Zu 1**. Die statische Betriebsweise der Gebläsebrenner führt dazu, daß die Brennereinstellung so grob erfolgen muß, daß alle variablen Luft- und Luftdruckverhältnisse gleichermaßen bewältigt werden können.

### Optimale Verbrennung

Um eine annähernd vollständige (stöchiometrische) Verbrennung des Brennstoffs zu erreichen, war es bisher notwendig der Flamme erheblich mehr Luft zuzuführen als rechnerisch erforderlich ist.

**Zu 2**. Obwohl ein Reinigungseffekt bei SO₂/SO₃ durch die Rauchgaswäsche nicht zu leugnen ist, bringt dieses Verfahren erhebliche Nachteile mit sich.

Als Folgeprodukt entstehen, je nach Waschmedium
- eine hochprozentige Säuremischung aus schwefliger Säure, Schwefelsäure, salpetriger Säure und Salpetersäure mit weiteren Verunreinigungen.
- die **Schadstoffmenge** wird durch das Zufügen der Waschflüssigkeit im Volumen wesentlich vergrößert.
- die Entsorgung der neuen Schadstoffe ist ungelöst, zumindest äußerst schwierig und kostenträchtig.
- eine chemische Neutralisation auf z.B. pH = 7 bringt lediglich eine neue Variante von Schadstoffen.
- beim Einsatz von Kalkmilch entsteht u.a. Gips.

Gemeinsam haben alle diese Folgeprodukte eins:
Sie sind Sondermüll und können weder in die Kanalisation geleitet werden noch auf normalen Mülldeponien gelagert werden. Selbst eine Endlagerung von Gips in ehemaligen Bergwerken oder grundsätzlich unter dem Grundwasserspiegel ist nicht möglich da das Grundwasser belastet wird.

Zusammenfassend kann gesagt werden, daß die Rauchgaswäsche im Regelfall nicht die Lösung für die Abgasreinigung ist zumal die zwangsläufige Sättigung der Rauchgase mit Feuchtigkeit kostspielige Folgerungen für den Schornstein bringt, oder das Rauchgas unter hohem Energieverbrauch wieder aufgeheizt werden muß.

Als De-NOₓ-Verfahren wird vorrangig die katalytische Nachbehandlung der Abgase angewandt.
Unterstellt man eine vollständige Umwandlung der Stickoxide, so verbleiben folgende Nachteile:
- Katalysatoren sind sehr teuer und verschleißen schnell
- die Abgase werden zusätzlich mit dem Schwermetall Platin befrachtet
- der entstehende Wasserdampf ist ebenfalls eine Emission die zur Bildung des "sauren Regens" wesentlich beiträgt
- das gereinigte Abgas muß entweder nachgeheizt werden oder die Schornsteine müssen kostspielig ausgekleidet werden.

Als weitere Variante zur Abgasreinigung ist das Nachschalten einer aufwendigen "Chemiefabrik" bekannt. Als Beispiel mag die europäische Patentschrift EP-B-00 11 228 gelten. So sehr diese chemischen Lösungsangebote theoretisch bestechen, praktikabel sind sie, wenn überhaupt, nur in äußerst seltenen Fällen.

### Aufgabenstellung

### Zu 1. Optimale Energieausbeute, Verringerung der Schadstofferzeugung.

Es ist die Aufgabe gestellt eine Steuerung zu finden, die alle variablen Einflüsse auf die Verbrennung der Primärenergie derart ausgleicht, daß eine nahezu stöchiometrische Verbrennung erreicht wird.

### Zu 2. Abgasreinigung

Hier ist die Aufgabe gestellt eine Vorrichtung/Verfahren zu finden die mit möglichst geringem technischen und kostenmäßigem Aufwand einen möglichst hohen Schadstoffanteil aus den Abgasen aussondern ohne gleichzeitig neue Schadstoffprobleme zu schaffen. Die Lösung sollte ferner alltagstauglich, universell einsetzbar und von Laien bedienbar sein.

### Lösung zu 1 und 2

Beide Ziele werden erreicht durch das Zwischenschalten folgender Erfindung zwischen Heizkessel und Kamin.

Die Erfindung besteht aus 3 Komponenten:
**Komponete A** ist ein Röhrenwärmetauscher der, von einem Wasserkreislauf (z.B. Heizungskreislauf) gekühlt, dem Abgas alle Wärmeenergie entzieht und das Abgas abkühlt bis minimal 35°C. Dadurch wird zunächst ein erheblicher Energierückgewinn möglich. Zum anderen wird durch das Abkühlen das Abgasvolumen reduziert und die Strömungsgeschwindigkeit so verlangsamt, daß im Abgas chemische Reaktionen stattfinden können.

SO₂-Anteile oxidieren mit dem im Abgas vorhandenen Restsauerstoff O₂ zu SO₃, NO-Anteile zu NO₂, SO₃ wiederum kondensiert mit Wasserdampfpartikeln zu H₂ SO₄, NO₂ dto. zu HNO₃, beide als Aerosole.

Bei der Oxidation von SO₂ zu SO₃ (zwischen 90° und 40°C) bilden NOₓ den Katalysator.

Reicht der Restsauerstoff im Abgas zur Oxidation nicht aus, wird dem Abgas bereits hier Frischluft beigemischt.

**Komponente B** ist eine Anzahl verschiedener Filter (z.B. Mattenfilter) die wahlweise mit Antimitteln imprägniert, die Säureaerosole auffangen und binden. Ebenso werden alle festen Partikel wie Rauch, Ruß, Asche, Rost nahezu 100 %ig ausgefiltert.
Neben der Filterung haben die Filter noch eine zweite Funktion: sie verhindern, ähnlich wie die sog. Rauchgasklappen, in der Stehzeit des Brenners die Stillstand-Strömungsverluste des Kessels.

In dem Zwischenraum zwischen mehreren Filtern wird eine Frischluftbeimischung installiert die die Abgastemperatur, Abgasfeuchte und die Schadstoffkonzentration weiter absenkt.

In dem Zwischenraum kann außerdem eine UV-Bestrahlung der Abgase erfolgen die die Oxidationen zusätzlich günstig beeinflußt.

**Komponente C** ist ein Saugzuggebläse mit stufenloser Regelung das folgende Aufgaben erfüllt:
a) durch Synchronschaltung mit dem Brenner wird das Ansaugen der Frischluft durch den Brenner unterstützt
b) die eingebauten Strömungswiderstände werden egalisiert
c) die Restthermik der Abgase nach dem Abkühlen wird verstärkt sodaß im Kamin kein Rauchgasstillstand eintritt
   Die Schwankungen der Luftdruckverhältnisse werden ausgeglichen, so daß der Brenner nahezu konstante Betriebsbedingungen erhält und somit fast stöchiometrische Verbrennungswerte erzielt.

Diese Regelung wird durch folgende Steuerung erzielt:
Ein Fühler mißt die Druck- bzw. Strömungsverhältnisse im Verbindungs-Rauchrohr Aggregat-Kamin. Werden hier gegenüber einem vorher eingegebenen Idealwert Abweichungen gemessen, wird der Lüftermotor in der Drehzahl entsprechend angepaßt bis der Idealwert erreicht ist und gehalten wird. Dadurch wird erreicht, daß das Verhältnis der Drucksysteme kesselseitig : kaminseitig konstant bleibt. Der Brenner kann optimal, als nahezu stöchiometrisch, betrieben werden.

Das Ergebnis:
**Die Verbrennung der Primärenergie ist optimal, das Entstehen von Schadstoffen dadurch auf ein Minimum reduziert.**

### Erzielbare Vorteile

Es wird eine nahezu stöchiometrische Verbrennung der Primärenergie erreicht unter Reduzierung der Schadstoffentstehung verbunden mit einer zusätzlichen Abgasreinigung.

## Patentansprüche

1. Verfahren zum Behandeln eines Heizungs-Abgasstroms auf seinem Strömungsweg vom Verbrennungsraum eines Gebläsebrenners zu einem Auslaß in die Atmosphäre, bei dem der mit einem künstlichen dem Ventilator des Gebläsebrenners synchron geschalteten Saugzug beaufschlagte Abgasstrom nach einer Abkühlung auf mindestens 65° durch Filtrieren von Schadstoffanteilen gereinigt wird, **dadurch gekennzeichnet,** daß das Abgas im Strom unter Umwandlung gasförmiger Schadstoffanteile zu Aerosolen verlangsamt und auf eine zwischen 35°C und 40°C liegende Temperatur abgekühlt wird, so daß die Schadstoffanteile in Aerosolform ausgefiltert und gebunden werden, daß der Sangzug eine stufenlose Regelung aufweist, und daß die Drehzahl des Ventilators durch eine druckabhängige, stufenlose Steuerung an einen für die stöchiometrische Verbrennung erforderlichen Idealwert angepaßt und Konstant gehalten wird.

2. Verfahren nach Anspruch 1, **dadurch gekennzeichnet**, daß der Abgasstrom durch Wärmetausch und/oder durch Sauerstoff- bzw. Frischluftzufuhr abgekühlt wird.

3. Verfahren nach den Ansprüchen 1 und 2, **dadurch gekennzeichnet,** daß durch Sauerstoff- bzw. Frischluftzufuhr die Feuchte und die Schadstoffkonzentration reduziert werden.

4. Verfahren nach den Ansprüchen 1 bis 3, **dadurch gekennzeichnet,** daß der Abgasstrom mit oxidationsverstärkendem UV-Licht bestrahlt wird.

5. Verfahren nach den Ansprüchen 1 bis 4, **dadurch gekennzeichnet,** daß der Abgasstrom vor dem und/oder während des Filtrierens mit Sauerstoff- bzw. mit Frischluft versorgt und/oder mit UV-Licht bestrahlt wird.

6. Vorrichtung zum Durchführen des Verfahrens nach Ansprüchen 1 bis 5, mit einer stromab des Gebläsebrenners angeordneter Wärmetauschvorrichtung zum Abkühlen, einer Filtervorrichtung zum Ausfiltern von Schadstoffen und einem mit dem Ventilator des Gebläsebrenners synchron geschalteten Sauggebläse zum Beaufschlagen des Abgasstroms, **dadurch gekennzeichnet,** daß der Sangzug eine stufenlose Regelung aufweist, und daß die Drehzahl des Ventilators durch eine druckabhängige, stufenlose Steuerung an einen für die stöchiometrische Verbrennung erforderlichen Idealwert angepaßt und Konstant gehalten wird.

7. Vorrichtung nach Anspruch 6, **dadurch gekennzeichnet** daß die Filtervorrichtung mehrere Filter enthält.

8. Vorrichtung nach Anspruch 7, **dadurch gekennzeichnet**, daß die Filter mit Antimitteln imprägniert sind.

9. Vorrichtung nach den Ansprüchen 7 und 8, **dadurch gekennzeichnet,** daß zwischen der Wärmetauschvorrichtung und der Filtervorrichtung und/oder zwischen Filtern der Filtervorrichtung wenigstens ein Sauerstoff- bzw. Frischluft-Zufuhranschluß vorgesehen ist.

10. Vorrichtung nach Anspruch 6, **dadurch gekennzeichnet,** daß die Filtervorrichtung mit einer UV-Bestrahlungsvorrichtung baulich vereinigt ist.

11. Vorrichtung nach den Ansprüchen 8 bis 10, **dadurch gekennzeichnet,** daß die UV-Bestrahlungsvorrichtung in der Filtervorrichtung zwischen zwei beabstandeten Filtern angeordnet ist.

12. Vorrichtung nach Anspruch 6, **dadurch gekennzeichnet,** daß die Wärmetauschvorrichtung einen, in den Heizungskreis bzw. Brauchwasserkreis eingeordneten, Röhrenwärmetauscher enthält.

13. Vorrichtung nach Anspruch 6, **dadurch gekennzeichnet,** daß im Einlaß zum Kamin ein Stehzeit-Frischluft-Zufuhranschluß, gegebenenfalls mit zugeordnetem Gebläse, vorgesehen ist.

14. Vorrichtung nach Anspruch 6 zur Steuerung des Ventilators von einem Drucksystem:Brennraum zu einem anderen Drucksystem:Kamin, **dadurch gekennzeichnet,** daß die Steuervorrichtung eine Eingabevorrichtung für bezüglich einer angenähert stöchiometrischen Verbrennung ideale Druck- bzw. Strömungsverhältnis-Sollwerte aufweist und an eine Fühleinrichtung für die Ist-Druck- und Strömungsverhältnis-Werte im Strömungsweg angeschlossen ist, und daß die Steuervorrichtung eine einstellbare Soll/Istwert-Abweichungs-Meßvorrichtung enthält, mit der bei Abweichungen Anpaßsteuersignale für den Antriebsmotor des Sauggebläses erzeugbar sind, um die Druck- und Strömungsverhältnisse zwischen den beiden Drucksystemen konstant zu halten.

## Claims

1. A process for treatment of heating installation waste gas flow along its path of flow from the combustion chamber of a blower burner to an outlet into the atmosphere, in which the waste gas flow with an artificial suction draught, synchronuously connected with the ventilator of the blower burner, is cleaned from pollutants by means of filtering after cooling to at least 65°, **characterized in that** the waste gas in the flow is slowed down under conversion of gaseous constituents to aerosoles, and is cooled down to a temperature between 35°C and 40°C, so that the pollutants in the form of aerosoles are filtered off and are bonded, that the suction draught has an infinitely-variable control, and that the speed of the ventilator is adjusted by means of a pressure dependent, infinitely-variable control to an ideal value required for stoichiometric combustion, and is maintained constant.

2. Process according to claim 1**, characterized in that** the waste gas flow is cooled by means of heat exchange and/or by means of oxygen respectively fresh air supply.

3. Process according to claims 1 and 2, **characterized in that** by means of oxygen respectively fresh air supply the humidity and pollutant concentration are reduced.

4. Process according to any one of claims 1 to 3, **characterized in that** the waste gas flow is irradiated with UV-light enhancing oxidation.

5. Process according to any one of claims 1 to 4, **characterized in that** the waste gas flow is supplied with oxygen respectively fresh air prior to and/or during the filtering and/or is irradiated with UV-light.

6. Device for providing the process according to claims 1 to 5 with a heat exchange device installed along downwards flow of the blower burner for cooling, a filtering device for filtering of pollutants and a filtering device which is synchronuously connected with the ventilator of the blower burner and suction blower for charging the waste gas flow, **characterized in that** the suction draught is provided with infinitely-variable control and that the speed of the ventilator is adjusted by means of a pressure dependent, infinitely-variable control to an ideal value required for a stoichiometric combustion and is maintained on a constant level.

7. Device according to claim 6, **characterized in that** the filter device consists of several filters.

8. Device according to claim 7, **characterized in that** the filters are impregnated with anti-medias.

9. Device according to claims 7 and 8, **characterized in that** between heat exchange device and filter device and/or between filters of the filter device at least one oxygen respectively fresh air supply is provided.

10. Device according to claim 6, **characterized in that** the filter device is an integral component part together with a UV-irradiation unit.

11. Device according to any one of claims 8 to 10, **characterized in that** the UV-irradiation unit in the filter device is arranged between two spaced filters.

12. Device according to claim 6, **characterized in that** the heat exchange unit comprises a pipe heat exchanger integrated into the heating circuit respectively the industrial water circuit.

13. Device according to claim 6, **characterized in that** in the inlet to the chimney a standstill fresh air supply intake is provided, if necessary with a connected blower.

14. Device according to claim 6 for control of the ventilator from a pressure system: combustion chamber to a different pressure system: chimney, **characterized in that** the control unit is supplied with an input unit for a proximated stoichiometric combustion for ideal pressure respectively flow ratio rated values and is connected to a sensor device for the actual pressure and flow ratio values in the flow path, and that the control unit comprises an adjustable nominal/actual value deviation measuring device with which in the case of deviations matching control signals for the drive motor of the suction blower may be produced to maintain the pressure and flow ratio between both pressure systems at a constant level.

## Revendications

1. Procédé pour traiter le courant d'un gaz d'échappement de chauffage sur son chemin d'écoulement entre la chambre de combustion d'un brûleur à vent et l'échappement dans l'atmosphère au cours duquel le courant d'échappement, alimenté d'un tirage par aspiration artificiel, synchronisé sur le ventilateur du brûleur à vent, est, après un refroidissement à au moins 65°, épuré par filtration des éléments polluants, **caractérisé par le fait que** le gaz d'échappement dans le courant soit ralenti par transformation des éléments polluants gazeux en aérosols et refroidi à une température entre 35° et 40°C, de sorte que les éléments polluants soient filtrés et liés sous forme d'aérosols, que le tirage présente un réglage continu et que le régime du ventilateur soit ajusté a une valeur idéale nécessaire à la combustion stoechiométrique et gardé constant par une commande continue dépendante de la pression.

2. Procédé selon demande 1. **caractérisé par le fait que** le courant de gaz d'échappement soit refroidi par échange thermique et/ou par alimentation d'oxygène où d'air frais.

3. Procédé selon demande 1. et 2. **caractérisé par le fait que** l'alimentation en oxygène où en air frais réduise l'humidité et la concentration de polluants.

4. Procédé selon les demandes 1 à 3 **caractérisé par le fait que** le courant de gaz d'échappement soit irradié de lumière ultraviolette renforçant l'oxydation.

5. Procédé selon les demandes 1 à 4 **caractérisé par le fait que** le courant de gaz d'échappement soit alimenté en oxygène ou en air frais et/ou irradié de lumière ultraviolette avant et/ou pendant le filtrage.

6. Dispositif de réalisation du procédé 1 à 5 avec un échangeur thermique disposé en aval du brûleur à vent pour le refroidissement, un dispositif de filtrage des polluants et un aspirateur synchronisé sur le ventilateur du brûleur à vent pour alimenter le courant de gaz d'échappement, **caractérisé par le fait que** le tirage présente un réglage continu et que le régime du ventilateur soit ajusté à une valeur idéale nécessaire à la combustion stoechiométrique et gardé constant par une commande continue dépendante de la pression.

7. Dispositif selon la demande 6 **caractérisé par le fait que** le dispositif de filtrage contienne plusieurs filtres.

8. Dispositif selon la demande 7 **caractérisé par le fait que** les filtres soient imprégnés d'antiproduits.

9. Dispositif selon les demandes 7 et 8 **caractérisé par le fait qu'**entre l'échangeur thermique et le dispositif de filtrage et/ou entre les filtres du dispositif de filtrage au moins une prise d'alimentation d'oxygène ou d'air frais soit prévue.

10. Dispositif selon la demande 6 **caractérisé par le fait que** le dispositif de filtrage soit structuralement relié au dispositif d'irradiation.

11. Dispositif selon les demandes 8 à 10**, caractérisé par le fait que** le dispositif d'irradiation dans le dispositif de filtrage soit disposé dans l'intervalle entre deux filtres.

12. Dispositif selon demande 6 **caractérisé par le fait que** l'échangeur thermique contienne un échangeur tubulaire disposé dans le circuit de chauffage ou circuit d'eau industrielle.

13. Dispositif selon demande 6 **caractérisé par le fait qu'**une prise d'alimentation d'air frais à temps d'arrêt soit prévue à l'entrée de la cheminée au besoin avec un ventilateur adjoint.

14. Dispositif selon demande 6 concernant la commande du ventilateur d'un système de pression: chambre de combustion à l'autre: cheminée **caractérisé par le fait que** le dispositif de commande présente un dispositif d'entrée pour des valeurs prescrites du taux de pression ou de courant idéales en ce qui concerne une combustion stoechiométrique approchée et soit raccordé à un dispositif de sondage sur le chemin du courant pour les valeurs du taux de pression réelle et du taux de courant et que le dispositif de commande soit muni d'un dispositif mesurant les écarts entre valeurs prescrites et valeurs réelles émettant lors d'écarts des signaux de réglage pour le moteur du ventilateur afin de maintenir constants les rapports de pression et de courant entre les deux systèmes de pression.
